# EUROPÄISCHE PATENTSCHRIFT

(11) **EP 0 542 052 B1**
(45) Veröffentlichungstag und Bekanntmachung des Hinweises auf die Patenterteilung: **24.04.1996**
(21) Anmeldenummer: 92118517.9
(22) Anmeldetag: 29.10.1992
(51) Int. Cl.: C09B 67/46, C09B 67/20

(54) **Wässrige Pigmentdispersionen**
Aqueous pigment dispersions
Dispersions de pigments aqueuses

(30) Priorität: 01.11.1991 DE 4136042
(43) Veröffentlichungstag der Anmeldung: 19.05.1993
(73) Patentinhaber: HOECHST AKTIENGESELLSCHAFT, D-65926 Frankfurt am Main (DE)
(72) Erfinder: Schnaitmann, Dieter, Dr., W-6239 Eppstein/Ts. (DE); Münkel, Albert, W-6237 Liederbach (DE)

(56) Entgegenhaltungen:
- EP-A- 0 013 909
- EP-A- 0 033 913
- US-A- 3 841 888
- PATENT ABSTRACTS OF JAPAN vol. 16, no. 304 (C-959)(5374) 6. Juli 1992
- Section Ch, Week 8315, Derwent Publications Ltd., London, GB; Class M22, AN 83- 35569K
- Section Ch, Week 8425, Derwent Publications Ltd., London, GB; Class E24, AN 84-155589
- Section Ch, Week 8523, Derwent Publications Ltd., London, GB; Class A96, AN 85- 138964
- Section Ch, Week 8743, Derwent Publications Ltd., London, GB; Class A84, AN 87- 301555

## Beschreibung

Die Erfindung liegt auf dem technischen Gebiet der wäßrigen Pigmentdispersionen.

Wäßrige Pigmentdispersionen enthalten üblicherweise sogenannte Wasserrückhaltemittel zur Verbesserung der Eintrocknungsbeständigkeit und der Froststabilität. Es handelt sich dabei um höhersiedende Lösemittel wie mehrwertige Alkohole, Glykolether und Säureamide wie beispielsweise Ethylenglykol, Diethylenglykol, Triethylenglykol, niedermolekulare Polyethylenglykole, Propylenglykole, Dipropylenglykole, niedermolekulare Polypropylenglykole, Butylenglykole, Hexylenglykole, Glyzerin, Diglyzerin, Pentaerythrit, Diethylenglykolethylether und -butylether sowie Formamid.

Werden Dispersionsanstrichfarben mit Pigmentpräparationen pigmentiert, die solche Lösemittel enthalten, so verbleiben die Lösemittel zunächst größtenteils im Anstrichfilm und werden langsam an die Umgebung, wie Innenräume, abgegeben. Da bei Dispersionsfarben zunehmend die Forderung erhoben wird, diese lösemittelfrei einzustellen, müssen auch sogenannte lösemittelfreie Pigmentpräparationen zum Einsatz kommen. Verzichtet man jedoch bei der Herstellung der wäßrigen Pigmentpräparationen auf die oben beschriebenen Wasserrückhaltemittel, so besitzen die Pigmentdispersionen nur eine mangelhafte Frostbeständigkeit und neigen sehr stark zum Eintrocknen. Dies hat den großen Nachteil, daß es bei angebrochenen Gebinden an Deckeln und Wandungen schon nach kürzester Zeit zu Verkrustungen kommt. Durch Abblättern in die wäßrige Dispersion kommt es bei der späteren Applikation zu Streifen- oder Stippenbildung sowie zum Verstopfen feiner Düsen oder Siebdruckschablonen, da die getrockneten Partikel durch einfaches Rühren nicht mehr redispergiert werden können.

Es ist bekannt, Zuckerderivate als Wasserrückhaltemittel einzusetzen. Dies geschieht dadurch, daß man gewöhnlichen Rohrzucker in Wasser löst. Nach Säurezugabe findet eine Spaltung (Inversion) in α-D-Glucopyranose und β-D-Fructofuranose statt, wodurch eine spätere Rekristallisation verhindert wird. Das entstehende Zuckergemisch wird auch als Invertzucker bezeichnet. Setzt man eine solche Zuckerlösung bei der Herstellung wäßriger Pigmentpräparationen ein, wird zwar die Eintrocknungsbeständigkeit gegenüber rein wäßrigen Präparationen deutlich verbessert, jedoch wird die Eintrocknungsbeständigkeit von bekannten Lösemitteln wie Ethylenglykol oder 1,2-Propylenglykol nicht erreicht.

Der vorliegenden Erfindung liegt die Aufgabe zugrunde, lösemittelfreie, insbesondere glykolfreie, wäßrige Pigmentdispersionen zu entwickeln, die eine vergleichbare oder verbesserte Eintrocknungsbeständigkeit und Frostbeständigkeit besitzen wie entsprechende lösemittelhaltige Systeme.

Es wurde gefunden, daß die Eintrocknungsbeständigkeit der herkömmlichen, glykolhaltigen Pigmentpräparationen überraschenderweise noch übertroffen wird, wenn man als Wasserrückhaltemittel anstelle der vorstehend genannten höhersiedenden Lösemittel eine Kombination von Sacchariden, insbesondere Saccharose, und Harnstoff bzw. Harnstoffderivaten wählt.

Gegenstand der vorliegenden Erfindung sind daher Pigmentdispersionen, bestehend im wesentlichen aus
a) mindestens einem organischen oder anorganischen Pigment oder einer Kombination davon,
b) mindestens einem Saccharid, vorzugsweise Saccharose, Glukose, Fructose, oder einem Gemisch davon;
c) mindestens einer Harnstoffverbindung der allgemeinen Formel R¹RN-CO-NR³R⁴, worin R¹, R, R³ und R⁴ unabhängig voneinander für Wasserstoff, C₁-C₅-Alkyl oder C₁-C₅-Alkylol stehen;
d) zur Herstellung wäßriger Pigmentdispersionen üblichen Dispergatoren;
e) Wasser und
f) gegebenenfalls weiteren üblichen Zusatzstoffen.

Bevorzugte Pigmentdispersionen sind solche, bestehend aus
a) 5 bis 80 Gew.-%, insbesondere 20 bis 60 Gew.-%, mindestens eines organischen oder anorganischen Pigmentes oder einer Kombination davon;
b) 2 bis 40 Gew.-%, insbesondere 5 bis 30 Gew.-%, mindestens eines Saccharids;
c) 2 bis 20 Gew.-%, insbesondere 3 bis 10 Gew.-%, mindestens einer der genannten Harnstoffverbindungen,
wobei die Summe der Gewichtsprozente aus b) plus c) zwischen 10 und 50 Gew.-%, vorzugsweise 10 und 30 Gew.-%, liegt;
d) 1 bis 20 Gew.-%, insbesondere 3 bis 15 Gew.-%, eines üblichen Dispergators;
e) 5 bis 70 Gew.-% Wasser und
f) 0 bis 3 Gew.-% üblicher Zusatzstoffe,
wobei die Gewichtsprozente jeweils auf das Gesamtgewicht der Pigmentdispersion bezogen sind.

Als anorganische Pigmente geeignet sind beispielsweise Weiß- und Buntpigmente, wie Eisenoxide, Chromoxide, Zinksulfide, Cadmiumsulfide oder -selenide, Titandioxid-Pigmente, Nickel- und Chromtitanpigmente, Mischoxide des Kobalts und Aluminiums, ferner Ruß und Verschnittpigmente.

Als geeignete organische Pigmente sind beispielsweise zu nennen: Azo- und Azomethinpigmente, Phthalocyanine, Chinacridone, Flavanthron-, Anthanthron- und Pyranthronverbindungen, Derivate der Perylentetracarbonsäure, der Naphthalintetracarbonsäure, des Thioindigos, des Dioxazins und des Tetrachlorisoindolinons und verlackte Pigmente. Es können auch Mischungen anorganischer und organischer Pigmente eingesetzt werden.

Erfindungsgemäß verwendbare Saccharide sind bevorzugt Saccharose (Rohrzucker), Invertzucker, Glucose, Fructose, Melasse, Glucosesirup, Raffinose und Mischungen der genannten Zucker.

Erfindungsgemäß verwendbare Harnstoffderivate sind beispielsweise Methylharnstoff, N,N-Dimethylharnstoff, N,N'-Dimethylharnstoff, Trimethylharnstoff, Tetramethylharnstoff, Ethylharnstoff, N,N'-Diethylharnstoff und Dimethylolharnstoff. Hinsichtlich Ökologie und Ökonomie kommen vorteilhaft Harnstoff und N,N,-Dimethylharnstoff in Betracht.

Als Dispergiermittel können übliche anionische, kationische oder nichtionogene Dispergatoren sowie deren Mischungen eingesetzt werden.

Geeignete anionische Dispergatoren sind Kondensationsprodukte aromatischer Sulfonsäuren mit Formaldehyd, wie Kondensationsprodukte aus Formaldehyd und Naphthalinsulfonsäuren, Ligninsulfonate mit einem durchschnittlichen Molekulargewicht zwischen 1000 und 80000, Alkylsulfosuccinate, sulfatierte oder sulfonierte Fettsäuren oder Fettsäureester, sulfatierte oder sulfonierte Öle wie Rizinusöl, Sulfobernsteinsäurehalbester von oxethylierten Novolaken, wie in der EP-A-0 065 751 beschrieben, oder Sulfate von oxalkylierten Alkylarylphenolen.

Von den kationischen Dispergatoren kommen zum Beispiel Alkyldimethylammoniumchloride, Dialkyldimethylammoniumchloride oder Alkyltrimethylammoniumchloride oder mit Dimethylsulfat quaternisierte Anlagerungsprodukte von Ethylenoxid an Fettaminen in Betracht.

Geeignete nichtionogene Dispergatoren sind zum Beispiel oxethylierte Alkyl-, Aryl-oder Alkylarylphenole, oxethylierte Fettalkohole und Fettamine, oxethylierte Alkylphenol-Novolake oder Anlagerungsprodukte von Alkylenoxiden, insbesondere Ethylenoxid, an Säureamide oder Mercaptane.

Ein großer Teil dieser Verbindungen und weitere in Betracht kommende nichtionogene Tenside sind in N. Schönfeld, Grenzflächenaktive Ethylenoxid-Addukte, Seiten 42 bis 95 (1976) und in K. Lindner, Tenside - Textilhilfsmittel - Waschrohstoffe, Band 1, Seiten 837 bis 917 (1964), beschrieben.

Weitere übliche Zusatzstoffe sind beispielsweise Konservierungsmittel, schaumreduzierende Substanzen, Antiabsetzmittel, Viskositätsregulatoren, Mahlhilfsmittel und die Pigmentbenetzung fördernde Substanzen.

Harnstoff und Harnstoffderivate wie N,N'-Dimethylharnstoff können alleine nicht eingesetzt werden, da diese bei der Trocknung der Pigmentdispersionen zur Kristallisation neigen. Das Gewichtsverhältnis von Saccharid zu Harnstoff(derivat) kann in den Grenzen von 1:2 bis 10:1 variieren. Als besonders vorteilhaft haben sich Verhältnisse von 2:1 bis 6:1 erwiesen. Die Herstellung einer entsprechenden Lösung geschieht einfach durch Lösen von Zucker- und Harnstoffkomponente in heißem Wasser unter Zusatz geringer Mengen Säure, wie Zitronensäure, und gegebenenfalls geringer Mengen eines geeigneten Konservierungsmittels. Auf diese Weise können bis zu 80 %ige, gut fließfähige, lagerstabile Lösungen hergestellt werden.

Um eine ausreichende Eintrocknungsbeständigkeit zu erzielen, ist ein Gehalt an Zucker/Harnstoffgemisch von mindestens 10 Gew.-% nötig. Bei geringem Pigmentgehalt können auch bis zu 50 Gew.-% Saccharid/Harnstoffgemisch eingesetzt werden. Vorzugsweise liegt der Gehalt an Zucker/Harnstoffgemisch zwischen 10 Gew.-% und 30 Gew.-%.

Die erfindungsgemäßen Pigmentdispersionen können Pigmentgehalte bis 80 Gew.% aufweisen. Zu geringeren Pigmentkonzentrationen hin ist keine technisch bedingte Grenze vorhanden.

Die Herstellung der erfindungsgemäßen Pigmentdispersionen kann in an sich bekannter Weise durch Zusammengeben der vorstehend genannten Einzelkomponenten und Feinverteilung in geeigneten Maschinen durch Naßmahlung oder in einem Knetprozeß erfolgen, je nach Kornhärte der eingesetzten Pigmente, beispielsweise mit Dissolvern, Rotor-Stator-Systemen, Kugelmühlen, Sand- oder Perlmühlen, in Knetmaschinen oder auf Walzenstühlen.

Die Zugabe der vorstehend genannten Dispergatoren erfolgt zweckmäßigerweise vor der Feinverteilung.

Die erfindungsgemäßen Pigmentdispersionen lassen sich wegen ihrer guten Lagerstabilität, ihrer guten Flockungsstabilität je nach eingesetztem Dispergiermittel, ihrer hohen Ergiebigkeit (Farbstärke) und der Brillanz der damit zu erreichenden Farbtöne mit Vorteil sehr universell zum Pigmentieren sowohl natürlicher als auch synthetischer Materialien verwenden, wobei die Pigmentierung bevorzugt in wäßrigen Medien erfolgt. Die als Wasserrückhaltemittel verwendete Kombination von Saccharid/Harnstoffderivaten kann auch bei Mehrzweckabtönpasten verwendet werden.

Die erfindungsgemäßen Pigmentdispersionen eignen sich zum Beispiel hervorragend zum Pigmentieren von Druck- und Anstrichfarben auf Basis von Homo- und Mischpolymerisaten aus Acrylnitril, Acrylsäure und Methacrylsäure und ihren Estern, Butadien, Styrol, Vinylacetat und Vinylpropionat sowie verseiften Alkydharzen und Harz- oder Ölemulsionen.

Die erfindungsgemäßen Pigmentdispersionen sind außerdem geeignet für die Herstellung von wäßrig/alkoholischen Flexodruckfarben, Druckfarben für den textilen Pigmentdruck, die Papiermasse- und Oberflächenfärbung, die Lederfärbung und die Pigmentierung von Spinnlösungen.
Ein wichtiges Anwendungsgebiet sind auch Anstrichfarben, die natürliche Bindemittel wie Stärke, Dextrin und pflanzliche oder tierische Leime oder auch Cellulosederivate enthalten. Ein weiterer Vorteil der erfindungsgemäßen Pigmentdispersionen gegenüber rein wäßrigen und lösemittelhaltigen Pigmentdispersionen ist, daß das nach Verdunsten des größten Teils des Wassers angetrocknete Material auch nach mehreren Tagen hervorragend redispergierbar ist.

Die Erfindung wird in nachfolgenden Herstellungsbeispielen und entsprechenden Vergleichsversuchen näher erläutert.

Prozentangaben beziehen sich auf das Gewicht; Teile (Tle) bezeichnen Gewichtsteile.

### Beispiel 1

In einem Mahlbehälter mit 1 Liter Inhalt wurden 36 Tle Styrolphenolpolyglykolether (Styrolphenol, oxethyliert mit 20 Mol Ethylenoxid pro Mol Styrolphenol) als Dispergator, 90 Tle einer 80 %igen wäßrigen Lösung von Rohrzucker/Harnstoff im Verhältnis von 3:1, 0,9 Tle eines handelsüblichen Konservierungsmittels und 89,1 Tle entmineralisiertes Wasser vorgelegt und homogenisiert. Nachdem am Dissolver 216 Tle Pigment Green 7 eingerührt wurden, fügte man 1100 Tle Siliquarzitperlen (Durchmesser = 1 mm) zu und ließ 1 Stunde in einer diskontinuierlichen Rührwerkskugelmühle mahlen Das Mahlgut wurde anschließend nach Verdünnen mit 18 Tln entmineralisiertem Wasser von den Mahlkörpern abgetrennt und entlüftet. Man erhielt eine lagerstabile, gut fließfähige Pigmentdispersion mit einem Pigmentgehalt von 48 %. Die erhaltene Pigmentdispersion besaß einwandfreie Flockungsstabilität in verschiedenen Dispersionsanstrichfarben und eine ausgezeichnete Eintrocknungsbeständigkeit, deren Prüfung nachfolgend beschrieben wird.

Prüfung der Eintrocknungsbeständigkeit von Pigmentpräparationen:
a) Die Prüfung der Eintrocknungsbeständigkeit erfolgte in einer Klimakammer bei etwa 70 % relativer Luftfeuchtigkeit und einer Temperatur von 20°C in der sogenannten Kachel, wobei die wäßrige Pigmentdispersion in ein Keramiknäpfchen mit einer Schichtdicke von etwa 3 mm gefüllt wurde. Die Beurteilung des Trocknungsverhaltens wurde in Zeitabständen von 1 Stunde, 4 Stunden, 24 Stunden, 48 Stunden und 5 Tagen durchgeführt und geschah nach folgenden Bewertungsstufen:
   Bewertungsstufen - Kachel
   - 0 =: keine Hautbildung, keine Eindickung
   - 1 =: Hautbildung leicht
   - 2 =: Hautbildung merklich
   - 3 =: Hautbildung stark
   - 4 =: Hautbildung rissig
   - 5 =: Hautbildung hart
   - 6 =: eingetrocknet
   - e =: eingedickt
   - se =: stark eingedickt
b) Bei einer zweiten Prüfung wurde die Präparation mit einem 200 µm Rakel auf eine Polyester-Klarsichtfolie aufgezogen und ebenfalls klimatisiert gelagert. Die Beurteilung des aufgezogenen puren Pigmentteiges erfolgte nach einer Lagerzeit von 1 Tag, 3 Tagen und 7 Tagen und wurde wie folgt bewertet:
   Bewertungsstufen - Folie
   Aussehen des Aufstrichs
   - 0 =: ohne Risse
   - 1 =: mit feinen kleinen Rissen
   - 2 =: stark aufgerissen

   Klebrigkeit
   - I =: klebrig
   - II =: klebfrei

   Verhalten des Aufstrichs beim Umbiegen der Folie
   - A =: bleibt unverändert
   - B =: wird rissig, splittert nicht ab
   - C =: splittert ab

### Beispiele 2 bis 28

Analog Beispiel 1 wurden weitere Versuche und entsprechende Vergleichsversuche durchgeführt, deren Zusammensetzung Tabelle 1 zu entnehmen ist.

Die Ergebnisse der Eintrocknungsbeständigkeitsprüfung sowohl der erfindungsgemäßen Pigmentdispersionen (Beispiele 8, 9, 12, 16, 20 und 22 bis 27) als auch der entsprechenden Vergleichsversuche (Beispiele 2 bis 7, 10, 11, 13 bis 15, 17 bis 19, 21 und 28) sind in Tabelle 2 aufgeführt. Prozentangaben in diesen Beispielen beziehen sich auf das Gewicht.

In den Beispielen 2 bis 9 sowie 27 und 28 enthielt die jeweilige Pigmentdispersion 4 Gew.-%, in den Beispielen 10 bis 26 5 Gew.-% des im Beispiel 1 genannten Dispergators.

In allen nachstehenden Beispielen enthielt die jeweilige Pigmentdispersion etwa 0,2 Gew.-% an üblichen Zusatzstoffen, beispielsweise Konservierungsmittel, mit Ausnahme von Beispiel 27, wo der Gehalt der Zusatzstoffe etwa 2 Gew.-% betrug.

Die genannten Pigmente sind im Colour Index veröffentlicht. Die Abkürzungen haben folgende Bedeutungen: P.Y. ist Pigment Yellow, P.R. ist Pigment Red, P.O. ist Pigment Orange.

**Tabelle 1**

| Beispiele 2 bis 28 | | | | | |
|---|---|---|---|---|---|
| Beispiel | [%] Pigment | Rohrzucker [%] | Harnstoff [HS] Dimethylharnstoff [DMHS] | Ethylenglykol [EG] Propylenglykol [PG] [%] | Wasser [%] |
| 2 | 40 P.Y. 3 | - | 25 % HS | - | 30,8 |
| 3 | 40 P.Y. 3 | - | 25 % DMHS | - | 30,8 |
| 4 | 40 P.Y. 3 | - | - | - | 55,8 |
| 5 | 40 P.Y. 3 | - | - | 25 EG | 30,8 |
| 6 | 40 P.Y. 3 | - | - | 25 PG | 30,8 |
| 7 | 40 P.Y. 3 | 25 | - | - | 30,8 |
| 8 | 40 P.Y. 3 | 15 | 10 % DMHS | - | 30,8 |
| 9 | 40 P.Y. 3 | 15 | 10 % HS | - | 30,8 |
| 10 | 40 P.Y. 1 | - | - | - | 54,8 |
| 11 | 40 P.Y. 1 | 25 | - | - | 29,8 |
| 12 | 40 P.Y. 1 | 15 | 10 % DMHS | - | 29,8 |
| 13 | 40 P.Y. 1 | - | - | 25 PG | 29,8 |
| 14 | 40 P.R. 112 | - | - | - | 54,8 |
| 15 | 40 P.R. 112 | 25 | - | - | 29,8 |
| 16 | 40 P.R. 112 | 15 | 10 % DMHS | - | 29,8 |
| 17 | 40 P.R. 112 | - | - | 25 PG | 29,8 |
| 18 | 40 P.O. 5 | - | - | - | 54,8 |
| 19 | 40 P.O. 5 | 25 | - | - | 29,8 |
| 20 | 40 P.O. 5 | 15 | 10 % DMHS | - | 29,8 |
| 21 | 40 P.O. 5 | - | - | 25 PG | 29,8 |
| 22 | 40 P.O. 5 | 22,5 | 7,5 % HS | - | 24,8 |
| 23 | 40 P.O. 5 | 18,5 | 6,5 % HS | - | 29,8 |
| 24 | 40 P.O. 5 | 15 | 5,0 % HS | - | 34,8 |
| 25 | 40 P.O. 5 | 11,5 | 3,5 % HS | - | 39,8 |
| 26 | 40 P.O. 5 | 7,5 | 2,5 % HS | - | 44,8 |
| 27 | 60 P.Y. 42 | 18 | 6 % HS | - | 10,0 |
| 28 | 60 P.Y. 42 | - | - | 24 PG | 10,0 |

**Tabelle 2**

| Prüfung der Eintrocknungsbeständigkeit | | | | | |
|---|---|---|---|---|---|
| Beispiel | a) Kachelprüfung | | | | |
| | 1 Stunde | 4 Stunde | 24 Stunde | 48 Stunde | 5 Tage |
| 1 | 0 | 0/e | 0/se | 1/se | 3/se |
| 2 | 1 | 2 | 3 | 6 | 6 |
| 3 | 0 | se | 6/se | 6 | 6 |
| 4 | 2 | 3 | 6 | 6 | 6 |
| 5 | 0 | 0 | 0 | e | se |
| 6 | 0 | 0/e | 1/e | 3/e | 4/se |
| 7 | 1/e | 2/Risse | 2/Risse | 3/Risse | 4/se |
| 8 | 0 | 0/e | 1/e | 1/e | 2/e |
| 9 | 0 | 0/e | e | 2/e | 3/e |
| 10 | 1 | 2 | 6 | 6 | 6 |
| 11 | Spur e | e | 3/e | 4/se | 5/se |
| 12 | 0 | 1 | 2 | 2 | e |
| 13 | 1 | 2 | 3 | 5 | 6 |
| 14 | 1 | 2 | 6 | 6 | 6 |
| 15 | 2 | 2/e | 4/se | 6 | 6 |
| 16 | 0 | 0 | 0 | e | 1/se |
| 17 | 0 | 1 | 2 | 3 | 5/se |
| 18 | 2 | 3 | 6 | 6 | 6 |
| 19 | Spur e | e | 4/e | 4/se | 5/se |
| 20 | 0 | 0 | e | e | 1/se |
| 21 | 0 | 1 | 2 | 4 | 4/se |
| 22 | 0 | 0 | 0 | Spur e | e |
| 23 | 0 | 0 | Spur e | e | 1/e |
| 24 | 0 | Spur e | 1/e | 1/se | 2/se |
| 25 | 0 | e | 3/e | 3/se | 3/se |
| 26 | Spur e | 2/e | 5 | 6 | 6 |
| 27 | 0 | 1/e | 2/e | 3/e | 3/se |
| 28 | 10/e | 2/e | 5/e | 6 | 6 |

| Beispiel | b) Folienprüfung | | |
|---|---|---|---|
| | 1 Tag | 4 Tage | 7 Tage |
| 1 | 0/I/A | 0/I/A | 0/I/A |
| 2 | 0/II/A | 1/II/B | 1/II/B |
| 3 | 0/II/A | 1/II/A | 1/II/A |
| 4 | 0/II/A | 1/II/B | 1/II/B |
| 5 | 0/I/A | 0/I/A | 0/I/A |
| 6 | 0/II/A | 0/II/A | 0/II/A |
| 7 | 0/I/A | 0/I/A | 0/I/A |
| 8 | 0/I/A | 0/I/A | 0/I/A |
| 9 | 0/II/A | 0/II/A | 0/II/A |
| 10 | 1/II/A | 1/II/B | 1/II/C |
| 11 | 0/I/A | 0/I/A | 0/I/A |
| 12 | 0/I/A | 0/I/A | 0/I/A |
| 13 | 1/II/B | 1/II/C | 1/II/C |
| 14 | 1/II/C | 1/II/C | 1/II/C |
| 15 | 0/II/A | 0/II/A | 0/II/A |
| 16 | 0/I/A | 0/II/A | 0/II/A |
| 17 | 2/II/C | 2/II/C | 2/II/C |
| 18 | 1/II/C | 2/II/C | 2/II/C |
| 19 | 0/I/A | 0/II/A | 0/II/A |
| 20 | 0/I/A | 0/I/A | 0/I/A |
| 21 | 0/II/A | 1/II/A | 1/II/A |
| 22 | 0/I/A | 0/I/A | 0/I/A |
| 23 | 0/I/A | 0/I/A | 0/I/A |
| 24 | 0/I/A | 0/I/A | 0/I/A |
| 25 | 0/II/A | 0/II/A | 0/II/A |
| 26 | 0/II/A | 0/II/A | 0/II/A |
| 27 | 0/I/A | 0/I/A | 0/II/A |
| 28 | 0/II/A | 1/II/B | 1/II/B |

## Patentansprüche

1. Pigmentdispersion, bestehend im wesentlichen aus
a) mindestens einem organischen oder anorganischen Pigment oder einer Kombination davon,
b) mindestens einem Saccharid;
c) mindestens einer Harnstoffverbindung der allgemeinen Formel R¹RN-CO-NR³R⁴, worin R¹, R, R³ und R⁴ unabhängig voneinander für Wasserstoff, C₁-C₅-Alkyl oder C₁-C₅-Alkylol stehen,
d) zur Herstellung wäßriger Pigmentdispersionen üblichen Dispergatoren;
e) Wasser und
f) gegebenenfalls weiteren üblichen Zusatzstoffen.

2. Pigmentdispersion nach Anspruch 1, bestehend aus
a) 5 bis 80 Gew.-%, vorzugsweise 20 bis 60 Gew.-%, mindestens eines organischen oder anorganischen Pigmentes oder einer Kombination davon;
b) 2 bis 40 Gew.-%, vorzugsweise 5 bis 30 Gew.-%, mindestens eines Saccharids;
c) 2 bis 20 Gew.-%, vorzugsweise 3 bis 10 Gew.-%, mindestens einer der genannten Harnstoffverbindungen,
wobei die Summe der Gewichtsprozente aus b) plus c) zwischen 10 und 50 Gew.-%, vorzugsweise 10 und 30 Gew.-%, liegt;
d) 1 bis 20 Gew.-%, vorzugsweise 3 bis 15 Gew.-%, eines üblichen Dispergators;
e) 5 bis 70 Gew.-% Wasser und
f) 0 bis 3 Gew.-% üblicher Zusatzstoffe.

3. Pigmentdispersion nach Anspruch 1 oder 2, dadurch gekennzeichnet, daß als Saccharid Saccharose, Glucose, Fructose oder eine Mischung davon verwendet wird.

4. Pigmentdispersion nach mindestens einem der Ansprüche 1 bis 3, dadurch gekennzeichnet, daß als Saccharid Rohrzucker oder Invertzucker verwendet wird.

5. Pigmentdispersion nach mindestens einem der Ansprüche 1 bis 4, dadurch gekennzeichnet, daß die Harnstoffverbindung Harnstoff ist.

6. Pigmentdispersion nach mindestens einem der Ansprüche 1 bis 4, dadurch gekennzeichnet, daß die Harnstoffverbindung N,N'-Dimethylharnstoff ist.

7. Pigmentdispersion nach mindestens einem der Ansprüche 1 bis 6, dadurch gekennzeichnet, daß das Mengenverhältnis von Saccharid zur Harnstoffverbindung 1:2 bis 10:1, vorzugsweise 2:1 bis 6:1, beträgt.

8. Verfahren zur Herstellung einer Pigmentdispersion nach mindestens einem der Ansprüche 1 bis 7, dadurch gekennzeichnet, daß die Einzelkomponenten zusammengegeben, vermischt und in einer geeigneten Maschine durch Naßmahlung feinverteilt oder einem Knetprozeß unterworfen werden.

9. Verwendung einer Pigmentdispersion nach mindestens einem der Ansprüche 1 bis 7 zum Pigmentieren von natürlichen und synthetischen Materialien.

10. Verwendung einer Pigmentdispersion nach mindestens einem der Ansprüche 1 bis 7 zum Pigmentieren von wäßrigen Dispersionsanstrichfarben, Druckpasten für den textilen Pigmentdruck, wäßrigen oder wäßrig/alkoholischen Flexodruckfarben, Viskose und Papiermassen.

11. Verwendung einer Pigmentdispersion nach mindestens einem der Ansprüche 1 bis 7 zum Pigmentieren von wäßrigen Dispersionsanstrichfarben, die natürliche Bindemittel enthalten.

## Claims

1. A pigment dispersion essentially comprising
a) at least one organic or inorganic pigment or a combination thereof,
b) at least one saccharide;
c) at least one urea compound of the formula R¹RN-CO-NR³R⁴, in which R¹, R, R³ and R⁴ independently of one another are hydrogen, C₁-C₅-alkyl or C₁-C₅-alkylol,
d) dispersants which are customary for the preparation of aqueous pigment dispersions;
e) water, and
f) if desired, further customary additives.

2. A pigment dispersion as claimed in claim 1, comprising
a) from 5 to 80% by weight, preferably from 20 to 60% by weight, of at least one organic or inorganic pigment or a combination thereof;
b) from 2 to 40% by weight, preferably from 5 to 30% by weight, of at least one saccharide;
c) from 2 to 20% by weight, preferably from 3 to 10% by weight, of at least one of the urea compounds mentioned,
the sum of the percentages by weight of b) plus c) being between 10 and 50% by weight, preferably between 10 and 30% by weight;
d) from 1 to 20% by weight, preferably from 3 to 15% by weight, of a customary dispersant;
e) from 5 to 70% by weight of water, and
f) from 0 to 3% by weight of customary additives.

3. A pigment dispersion as claimed in claim 1 or 2, wherein sucrose, glucose, fructose or a mixture thereof is used as saccharide.

4. A pigment dispersion as claimed in at least one of claims 1 to 3, wherein cane sugar or invert sugar is used as saccharide.

5. A pigment dispersion as claimed in at least one of claims 1 to 4, wherein the urea compound is urea.

6. A pigment dispersion as claimed in at least one of claims 1 to 4, wherein the urea compound is N,N'-dimethylurea.

7. A pigment dispersion as claimed in at least one of claims 1 to 6, wherein the quantitative ratio of saccharide to urea compound is from 1:2 to 10:1, preferably from 2:1 to 6:1.

8. A process for the preparation of a pigment dispersion as claimed in at least one of claims 1 to 7, which comprises combining the individual components, mixing them and finely dispersing the mixture in a suitable apparatus by wet milling or subjecting the mixture to a kneading procedure.

9. The use of a pigment dispersion as claimed in at least one of claims 1 to 7 for pigmenting natural and synthetic materials.

10. The use of a pigment dispersion as claimed in at least one of claims 1 to 7 for pigmenting aqueous emulsion paints, print pastes for textile pigment printing, aqueous or aqueous/alcoholic flexographic printing inks, viscose, or paper pulps.

11. The use of a pigment dispersion as claimed in at least one of claims 1 to 7 for pigmenting aqueous emulsion paints which comprise natural binders.

## Revendications

1. Dispersion pigmentaire, constituée essentiellement
a) d'au moins un pigment organique ou minéral ou d'une de leurs combinaisons,
b) d'au moins un saccharide ;
c) d'au moins un composé de l'urée de formule générale R¹RN-CO-NR³R⁴, dans laquelle R¹, R, R³ et R⁴, indépendamment l'un de l'autre, sont chacun un hydrogène ou un radical alkyle en C₁-C₅ ou alkylol en C₁-C₅,
d) de dispersants usuels pour la fabrication de dispersions pigmentaires aqueuses,
e) d'eau, et
f) éventuellement d'autres additifs usuels.

2. Dispersion pigmentaire selon la revendication 1, constituée
a) de 5 à 80 % en poids, de préférence de 20 à 60 % en poids, d'au moins un pigment organique ou minéral ou d'une de leurs combinaisons ;
b) de 2 à 40 % en poids, de préférence de 5 à 30 % en poids, d'au moins un saccharide ;
c) de 2 à 20 % en poids, de préférence de 3 à 10 % en poids, d'au moins l'un des composés de l'urée mentionnés,
la somme des pourcentages en poids de b) et de c) étant comprise entre 10 et 50 % en poids, de préférence entre 10 et 30 % en poids ;
d) de 1 à 20 % en poids, de préférence de 3 à 15 % en poids, d'un dispersant usuel ;
e) de 5 à 70 % en poids d'eau, et
f) de 0 à 3 % en poids d'additifs usuels.

3. Dispersion pigmentaire selon la revendication 1 ou 2, caractérisée en ce qu'on utilise comme saccharide le saccharose, le glucose, le fructose ou un de leurs mélanges.

4. Dispersion pigmentaire selon l'une des revendications 1 à 3, caractérisée en ce qu'on utilise comme saccharide du sucre de canne ou du sucre interverti.

5. Dispersion pigmentaire selon au moins l'une des revendications 1 à 4, caractérisée en ce que le composé de l'urée est l'urée.

6. Dispersion pigmentaire selon au moins l'une des revendications 1 à 4, caractérisée en ce que le composé de l'urée est la N,N'-diméthylurée.

7. Dispersion pigmentaire selon au moins l'une des revendications 1 à 6, caractérisée en ce que le rapport pondéral du saccharide au composé de l'urée est de 1:2 à 10:1, de préférence de 2:1 à 6:1.

8. Procédé pour fabriquer une dispersion pigmentaire selon au moins l'une des revendications 1 à 7, caractérisé en ce qu'on réunit les différents constituants, on les mélange et, dans une machine appropriée, on les soumet à une division fine par broyage par voie humide, ou à une opération de malaxage.

9. Utilisation d'une dispersion pigmentaire selon au moins l'une des revendications 1 à 7 pour pigmenter des matériaux naturels et synthétiques.

10. Utilisation d'une dispersion pigmentaire selon au moins l'une des revendications 1 à 7 pour pigmenter des peintures-émulsions aqueuses, des pâtes d'impression pour impression pigmentaire textile, des encres flexographiques aqueuses ou aqueuses/alcooliques, de la viscose et des pâtes à papier.

11. Utilisation d'une dispersion pigmentaire selon au moins l'une des revendications 1 à 7, pour pigmenter des peintures-émulsions aqueuses contenant des liants naturels.
